# EUROPEAN PATENT APPLICATION

(11) **EP 2 216 743 A1**
(43) Date of publication of application: **11.08.2010**
(21) Application number: 09001778.1
(22) Date of filing: 09.02.2009
(51) Int. Cl.: G06Q 30/00

(54) **Method and server for quality assessment of a social network service platform**

(71) Applicant: Deutsche Telekom AG, 53113 Bonn (DE)
(72) Inventor: Rederer, Andreas, 14167 Berlin (DE); Sanmateu, Maria Amparo, 65189 Wiesbaden (DE); Lienicke, Andreas, 10407 Berlin (DE); Trier Matthias, 12529 Berlin-Schönefeld (DE); Bobrik Anette, 14612 Falkensee (DE); Gentsch Peter, 60329 Frankfurt am Main (DE)
(74) Representative: Kampfenkel, Klaus

(57) **Abstract**

As a new and improved approach for quality assurance of online communities the invention proposes a method for determining a quality measure associated with a social network service platform (210), comprising the steps of importing data from said social network service platform (210), transforming the imported data into a predetermined data structure, storing the transformed data in a database (150), wherein the data is stored as a data network of interrelated data entities (501-504; 601-604), comprising at least two different types of data entities, analyzing media content of at least one of said data entities (601-604), calculating a predetermined metric of at least one of said data entities (501-504; 601-604) based on the analysis results and on the relationships between the data entities (501-504; 601-604), and storing the analysis results and/or said calculated metric in said database (150) as a quality measure of the social network service platform (210).

The invention further proposes a server for performing such a method.

## Description

### Field of the invention

The invention generally relates to online communities and in particular to a method and a server for quality assessment of a social network service platform used by an online community.

### Background of the invention

A present trend in the usage of the internet, usually described with the term Web 2.0, is directed to enhance creativity and collaboration by providing an architecture of participation where users themselves can contribute website content. Such concepts have led to the development of communities and hosted services, such as social-networking sites, video sharing sites, wikis or blogs.

The focus of social network services lies on building online communities of people who share interests and/or activities, or who are interested in exploring the interests and activities of others. A typical social network service is web-based and provides ways for users to interact, such as e-mail and instant messaging services.

Online communities can be utilized for marketing and advertising purposes, wherein it is known to identify users, who have a strong influence on other users by means of social network analysis methods and to thereby focus marketing and advertising efforts. WO 2008/082962 A1 for instance describes a computer-implemented method for displaying advertisements to members of a network, wherein communities and influencers of communities are identified and advertisements are placed solely on the profiles of the influencers. This allows to make use of efficient spread of word-of-mouth information in social networks.

Giving users the opportunity to easily, speedily and freely publish content visible to the whole world is the key idea behind all communities. This however leads to publishing of content that is unwanted by the community operator. The reasons for content being unwanted are diverse and may be for instance of legal nature due to privacy protection or youth protection laws or freedom of speech limitations. Other reasons may comprise thematic misfit or low quality of content or advertiser objections due to content which is overly critical of the respective company or product. Identifying and subsequently blocking or removing this unwanted content is a task that has to be managed by all virtual communities. For communities with a large, active population this can be a process that binds significant resources.

It is therefore an object of the present invention to show a new and improved approach to quality assessment of social network service platforms, in particular of platforms for online communities which allow for user-generated content. In particular it is an object of the invention to show a new and improved way of meeting issues of compliance with behavioral rules and of content quality of social network service platforms, and of monitoring the development of respective online communities.

### Summary of the Invention

The inventive solution of the object is achieved by each of the subject matter of the respective attached independent claims. Advantageous and/or preferred embodiments or refinements are the subject matter of the respective attached dependent claims.

A social network service platform for an online community can be provided as hardware and/or software. Typically the platform comprises at least one computer with storage means, wherein the computer is connected to the internet or to an intranet and is provided with a - in particular web-based - user interface. In the storage means all relevant data of an online community is stored, such as for instance user profiles, information on relations between users, user-generated content and log-files.

The inventive method is directed to determining a quality measure associated with such a social network service platform and comprises the steps of importing data from said social network service platform, transforming the imported data into a predetermined data structure and storing the transformed data in a database, wherein the data is stored as a data network of interrelated data entities, comprising at least two different types of data entities. The inventive method further comprises the steps of analyzing media content of at least one of said data entities and calculating a predetermined metric of at least one of said data entities based on the analysis results and on the relationships between the data entities. The analysis results and/or said calculated metric are a quality measure of the social network service platform and are stored as such in the database. The quality measure can be associated with the social network service platform in general, alternatively it can be user- or content-specific.

In a most preferred embodiment the data imported from the social network service platform comprises user-generated content, which may be multi-medial content. Therefore, the data network preferably comprises associated data entities which comprise respective user-generated media content items. Generally, any kind of media content items are supported, such as for instance text files, images, audio sequences or video sequences. Accordingly, the step of analyzing the media content preferably is adapted to the respective content type. So, for instance corpus-based linguistic text mining tools are utilized for analyzing texts and object or pattern recognition techniques are utilized for analyzing images or videos. Therefore, the step of analyzing the media content advantageously is based on parameters and/or samples provided by the social network service platform. Such a sample may for instance be a text corpus comprising a plurality of text documents for creating a statistical baseline for text mining or an unwanted image to be used for pattern recognition. The analysis may further with advantage use self-learning techniques to rate content as wanted or unwanted based on provided samples.

The analysis results and/or the calculated metric may be used to automatically identify a data entity which is likely to comprise an unwanted content item. For automatically removing or blocking content with a high likelihood of being unwanted content the method therefore advantageously comprises the steps of evaluating the determined quality measure and transmitting a command to remove and/or block at least one item of user-generated content to the social network service platform, when the evaluation indicates said item of user-generated content to be unwanted.

As already stated above, the data entities of the data network which form the basis for performing the steps of analyzing media content and of calculating a metric comprise at least two different types of data entities. Most preferably a first type of data entity is a user node which represents a user of the social network service platform and which may comprise a user profile, and a second type of data entity is a content node which represents a user-generated media content item, wherein the step of calculating the predetermined metric is based on correlations between different user nodes and on correlations between content nodes and user nodes. A metric preferably is calculated for a content node, for a user node, for a group of nodes or for the whole data network.

In a preferred embodiment the calculated metric is a key performance indicator (KPI), which is calculated using social network analysis tools. A number of examples for KPI's are given below.

Social network analysis tools as such are known. One of the central ideas of the invention, however, is to combine network and content analysis to an overall analysis and to treat user and content nodes as actors of the social network of a community, wherein in particular content ratings are used as weighted input for a social network analysis.

In a preferred embodiment of the method the content analysis generates at least one tag suitable for categorization of the respective analyzed data entity. Proper tags enhance the quality of user-generated content and thereby keep users interested and active. Accordingly, any generated new tag of a content data item preferably is fed back to the social network service platform.

An inventive server for determining a quality measure associated with a social network service platform, which in particular is adapted to perform the method as described above, comprises a data import interface for importing data from said social network service platform, wherein the interface is adapted to transform the imported data into a predetermined data structure. For storing the transformed import data the server comprises a database, wherein the data is stored as a data network of interrelated data entities, comprising at least two different types of data entities. For determining the quality measure an assessment module is provided which has access to the database. The assessment module comprises at least one analyzing module for analyzing media content of at least one of said data entities and a calculating module for calculating a metric of at least one of said data entities based on results provided from at least one of said analyzing modules and on the relationships between the data entities in the data network. The assessment module is adapted to store the analysis results and/or the calculated metric in the database as a quality measure of the social network service platform.

The determined quality measures are particularly used to assure the content quality of the social network service platform under inspection by identifying unwanted content. The server therefore in the following also is referred to as content quality assurance server (CQAS).

Providing a data import interface has the advantage that a generalized data structure can be used for different social network service platforms. Preferably, for different social network service platforms different individually adapted data import interfaces are provided, which preferably are adapted to import data which comprises user-generated content.

For practical purposes the server is provided with a front-end with an interface for exporting and/or reporting results from the assessment module. The assessment module further preferably is adapted to automatically evaluate the determined quality measures and to automatically transmit a command to remove and/or block at least one item of user-generated content to the social network service platform.

For each distinct media type provided by the social network service platform typically a separate analyzing module is provided, which is respectively adapted to analyze a text file, an image, an audio sequence or a video sequence based on parameters and/or samples provided by the social network service platform. The analyzing module preferably is adapted to generate a content rating which can be stored as meta-data of the analyzed data entity.

The generalized data structure used by the CQAS preferably comprises a data network suitable for utilizing social network analysis tools. Accordingly the data network comprises data nodes and relations or ties between the data nodes, wherein at least two different types of data nodes are provided, preferably comprising content nodes and user nodes. Since a basic idea of the invention is to perform a specially adapted social network analysis which not only takes into account the user nodes, but also the content nodes and content ratings, the calculating module preferably is adapted to calculate a metric, in particular a key performance indicator (KPI), based on correlations between different user nodes and on correlations between content nodes and user nodes. The calculated metric preferably can be stored as meta-data of the respective data entity or node.

Furthermore, for content quality enhancement the analyzing module with advantage is adapted to generate tags suitable for categorization of analyzed data entities, which also can be stored as meta-data of the respective data entities.

For practical purposes the CQAS further comprises an access interface for allowing an operator of the social network service platform to access the information generated by the assessment module.

### Brief Description of the Figures

It is shown in
- Fig. 1: schematically a communication system comprising several social network service platforms,
- Fig. 2: schematically a preferred embodiment of an inventive server for determining a quality measure associated with an online community, and
- Fig. 3: schematically a standardized data network utilized by the server shown in Fig. 1.

### Detailed Description of the Invention

Subsequently, preferred but exemplar embodiments of the invention are described in more detail with regard to the figures. Same reference numbers indicate same or similar components.

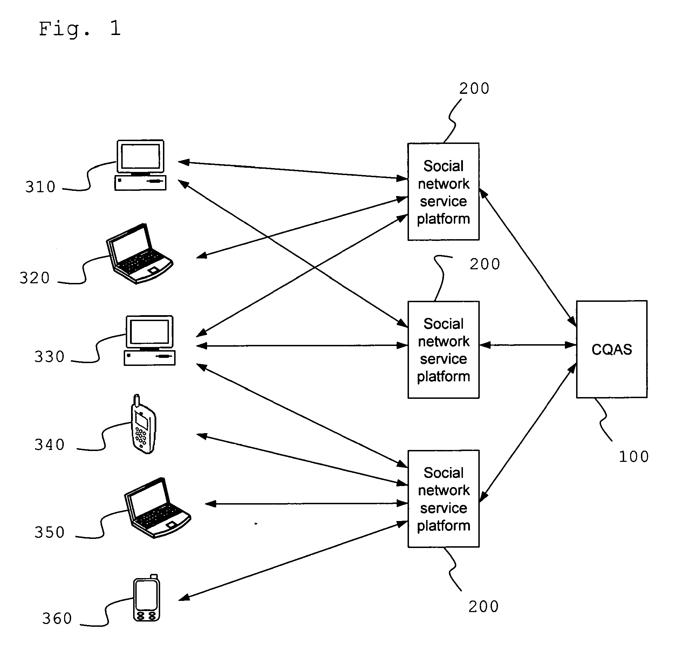

Fig. 1 schematically shows a communication system comprising three exemplar servers 200, each running a social network service platform. The social network service platforms are used by a large number of users, of which only the exemplar users 310 to 360 are shown. Typical online communities may have millions of members, of which thousands may simultaneously access the social network service platform. The users generally can utilize different devices, such as desktop computers 310 or 320, notebooks 320 or 350, PDAs 360 or smartphones 340, depending on the type of the respective platform. Preferably the social network service platforms allow for user-generated content to be published on the platform. An inventive content quality assurance server (CQAS) 100 is at least temporarily connected to each of the servers 200 which run the social network service platforms, in order to import and assess data associated with respective social network service platform or online community.

In the following three use cases for the inventive method performed by the CQAS 100 are described in detail.

A first problem which is solved by means of the invention is to support compliance issues of communities. Giving users the opportunity to easily, speedily and freely publish content visible to the whole world is the key idea behind all communities. Naturally this leads to publishing of content that is unwanted by the community operator. Some reasons why content may be unwanted are of legal nature due to privacy protection youth protection laws or freedom of speech limitations. Further reasons comprise thematic misfit, low quality, hurting content, issues of company image, as for instance in case of content comprising critical statements of a company or a product, or other advertiser objections. Identifying and subsequently blocking and/or removing this unwanted content is a task that has to be managed by all virtual communities. For communities with a large, active population this can be a process that binds significant resources that could be put to better use, e.g. improving the community. To help communities to cope with this problem, the invention provides automatic marking and/or blocking or alerting of unwanted content by generating as risk index which is an indicator of how likely a certain content item is "unwanted". Additionally the system provides a user risk index to support operators in identifying consistently misbehaving users, also referred to as "trolling".

A second purpose the invention serves is quality enhancement of a social network service platform. Having spent significant effort and capital to bring users into the online community, it is important to keep them as active and loyal users. The CQAS 100 facilitates retention by supporting the community operator to block unwanted content and identify and rank content that is especially interesting for certain community subsections. "Knowing" which content is most interesting in a given context enables the operator to place it more prominently and thereby making it more accessible. Enhancing the quality of user-generated content keeps users interested and active. Content that is properly tagged and categorized is easier to find and consume. For user-generated content it is important that it is not only available but also presented in the right context. A recipe for a cake may be highly regarded in the cooking section of a site, but may be unwanted in the soccer section. The CQAS 100 facilitates quality improvements of user-generated content by delivering automatically generated tag and category suggestions to the community platform 200. The community operator can use this information to automatically generate relevant "tags" for content or by presenting tag suggestions to the users. Additionally the community operator can identify wrongly categorized content and react by providing better category guidance or by moving content.

A third use case of the invention relates to assessment of community health and development controlling. Monitoring adoption of existing features and community subsections helps the operator to identify subsections of a site that are not developing as expected. Using network analysis the CQAS 100 informs the community about the development stage of certain sections or features within the community, thereby answering the questions whether certain subsections of the community are growing, isolated, static or in the process of dying.

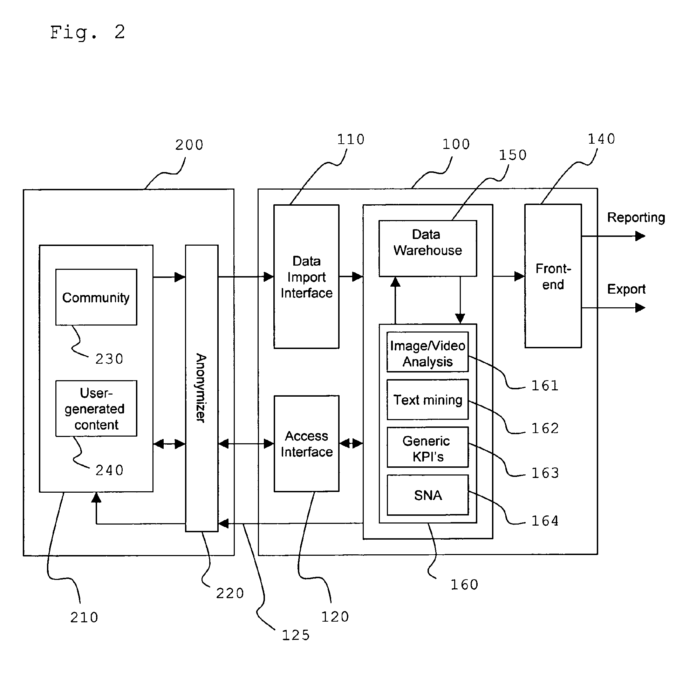

Fig. 2 schematically shows a preferred embodiment of a CQAS 100, which is adapted for determining a quality measure associated with a social network service platform 210 running on a server 200 of the social network service provider. In the following the working principle of a preferred embodiment of the inventive method is described with reference to Fig. 2.

The CQAS 100 is a modular combination of multi-medial mining aiming to serve different types of content platforms 210, enhanced with data modelling and reporting processes.

The CQAS 100 first collects all relevant information from the social network service platform 210 and transforms it into a generalized data structure by means of a data import interface 110. The data structure is fixed once the data is imported into the CQAS 100, since the data import interface 110 provides translation between the data scheme of the partnering system 200, used in the social network service platform 210 for storing user-generated content 240 and information on the community 230, and the CQAS 100, allowing encapsulation of all partner specifics into this layer. Additionally, the layer provides an access interface 120, preferably provided as an API, in particular a web-services API, for the partner system 200 to retrieve information from the CQAS 100 for reporting or direct usage. Commands to automatically remove and/or block content may be transmitted from the CQAS 100 to the partner system 200 on a separate path, indicated by reference numeral 125. The data import comprises community specific settings like categorization of content, provision of samples of community relevant content and/or of samples of community irrelevant content. The imported and transformed data is stored in data warehouse 150. Optionally in the partner system 200 an anonymizer 220 may be provided which comprises a scrambling and descrambling functionality for anonymizing user data.

In a second step the content is analyzed - depending on the type of the given content - via text analysis, image analysis and/or video analysis. In the shown embodiment the assessment module 160 is adapted to analyze content which can be text, images or videos. For this purpose analyzing modules 161 and 162 are provided, which automatically analyze the content according to statistics, linguistics, text mining, and machine learning processes. For linguistic analysis preferably a community specific text corpus is prepared. For video and image analysis with advantage learning algorithms are established with image samples provided by the social network service platform 210 and given categorization and tagging information is used to classify content-objects, wherein content comments are included in the categorization.

In a third step social network based key performance indicators are calculated by means of analyzing modules 163 and 164, wherein content-user and user-user correlations are calculated via social network analysis (SNA). In websites allowing for user-generated content (UGC) providers are not broadcasting information to isolated consumers, but the users, who generate own content, form a dense network of interrelationships, which give them power and feedback and which provides strong motivation to participate. The users are lobbying and organizing around the provider's contents. For quality assurance, this implies that understanding these networks and their emergence and evolution is a key objective.
Social network analysis as employed by the invention in the context of user-generated content focuses on the analysis of organizational structures between users and content objects. This augments the object oriented view of text analysis and user profiling and provides the analyst with additional insight about the health and prosperity of a community's structural properties, i.e. the group formation, users' attention, or the motivation to produce content and to participate in commenting in a virtual people network.

The last step is to provide the now available information. This can be either done via a user interface or directly exporting data and statistics. For this purpose a front-end 140 is provided. The above described compliance use case includes a risk index report, which provides a list of content objects with an attached risk index, which is a combination of a risk index resulting from media analysis, i.e text or video analysis, and user closeness to marked content (UCMC). In the quality enhancement use case for instance a tagging suggestions report is provided as a direct outcome from text and video analysis measurements. A community health report may for instance comprise a report on the average user centrality with the top 20 users, enabling to find category leaders that attract much attention from many other users.

The social network analysis method employed by the invention preferably uses three basic data objects for which SNA metrics are calculated: user, content, and network. Each time a new set of SNA user and content metrics is calculated, a new network object is created and stored in a table 'SNA_Network' with a unique ID, optionally a name, the date of the last update, and a reference to the SNA scope collection of the network. The table 'SNA_ScopeCollection' includes a unique ID and the start and end date. The start and end date refer to the time scope the network is calculated for, e.g. all data from the last month, three months, last year, and so on. That is, if the SNA metrics are calculated every month, there will always be a new network entry.

In the following some exemplary key performance indicators are described, which the CQAS 100 preferably is adapted to calculate.
- Users average idle time between activity (UIT): The average idle time between a users participation shows the frequency with which a user participates in the network.
- User_Activity (UA): User activity measures the number of messages created by a user and can identify active users.
- Share of isolated participants in terms of reaction from others (ISON): This measure computes the percentage of users which have not yet received any reference (including friendship invitations) from others in the community.
- Core Group Share (CGS): As a subsequent computation after UA (user activity), this measure ranks actors by their activity and collects actors into a core group until e.g. 80% of volume is achieved, counted as a percentage of all users, optionally averaged over time.
- Core-Periphery Stabilization/Fluctuation (CPSF): This measure indicates the change in the members of the core group over time by computing the top 20% and bottom 20% central users via a subsequent computation after user centrality (UC). Then the percentage of change in these lists is calculated as an indicator for fluctuation in the center and in the periphery of the network.
- User Centrality (UC): User Centrality indicates the attention a user receives from other users measured by the number of other users citing or referencing the observed user and thus forming a relationship. By such references the user gets prominent in his community and many other users gather around him and observe his doings. This measure is also sometimes referred to as User Work Centrality to differentiate it from a users social (friendship) centrality. Here, work refers to his contribution of contents.
- User-Social-Centrality (USC): This measure is similar to UC, with the difference that USC is not measured by citing relationships but by confirmed social contacts (number of friends).
- User Social vs Work Centrality (USCUC): This measure computes the ratio of USC and UC to show if a users work centrality is related to his social contacts. Further shows, if having friends is generally rewarding for getting attention in the network (as the average correlation of USC and UC).
- User-Closeness to marked Content (UCMC): This measure indicates how close on average and measured in path length a user is to unwanted or otherwise marked content objects in his environment. The measure can aid as a risk measure of how far certain users are away of marked content objects or users (risk exposure).
- Correlation of User_Activity and Centrality (Corr_UA_UC): This measure indicates the correlation of all users' activity (measured by created objects) and their centrality. This shows, if active users are likely to be central users or if activity comes from the periphery, or if the central users are less active (but receive much attention). It shows, if it does pay off to be active in the long run and indicates the incentives to participate.
- Risk index (RIX): This measure is based on weighted user behavior metrics as well as on average CP, USCUC and Corr UAUC metrics.
- Content Centrality (CC): This measure indicates the number of users that reacted on a content object. Whereas CP is showing the attention in terms of activity, CC is showing the attention in terms of size of community that reacted to the content object. CC hence identifies contents with prominence among many users.
- Content Popularity (CP): This measure indicates the attention that users in a community dedicate to a content object by referencing, linking, citing it in their contributions (i.e. number of votes, comments, etc. linking, citing, referencing an article, posting, comment, media element, ...). CP shows how one contribution triggers discussion activity and gets into the focus of the community .
- Content_Popularity in Category (CP(k)): Similar to CP (CP: number of messages citing the observed object) but filtered. Here, the Content Popularity only takes into account citing/linking contents (e.g. votes, comments) within a selected category (either predefined or produced by a classification algorithm). This can identify content that is popular in a category.

The enhanced network measures of Centrality utilized by the invention describe quantitive content node properties based on their position in the network with the intention to identify key players, e.g. formal or informal leaders or important knowledge workers and relevant content elements.

Studies show that central people are more informed, powerful, successful and satisfied. Content Centrality preferably is calculated based on the following measures:
- Betweenness: Number of people who a person is connected to indirectly through their direct links. These people are most likely broker who synthesize diverse information.
- Closeness: Inverse of the sum of the shortest distances between each individual and every other person in the network. These people are most likely to find out information first.
- Degree: The count of the number of ties to other actors in the network, whereas the actors with a high degree are most likely to influence and be influenced directly.

The basic user-user grid is enhanced by information about the relevance of the user-related content.

In general internal and external central content nodes are more informative, powerful in the sense of relevance for advertisements and/or visibility of the whole community, successful in the sense of high potential for visitor to community user conversion and satisfying in the sense of community success.

Adding topic analysis to this, the critical central internal and external content nodes can be influenced or blocked, to prevent any negative effects on the community reputation.

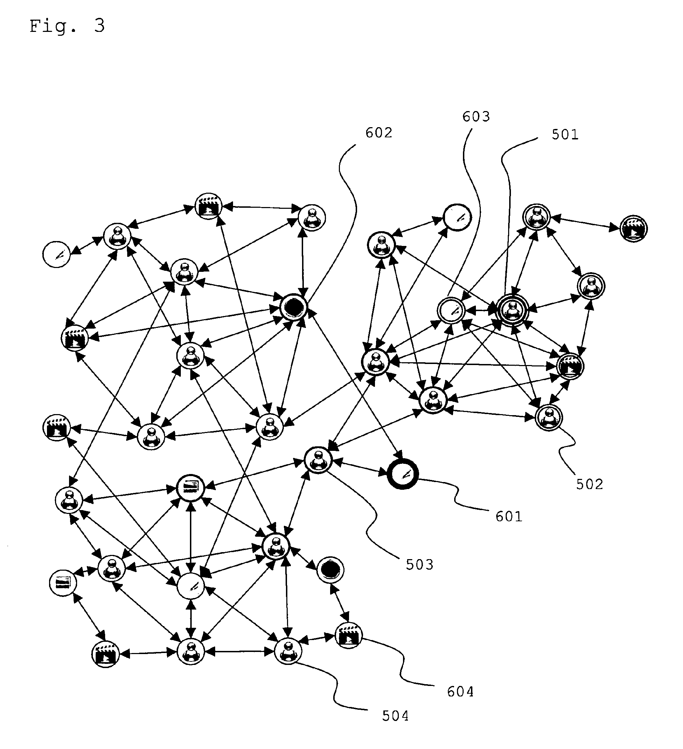

One of the central ideas behind the invention is to combine network and content analysis to an overall analysis and to treat all content nodes - video, audio, picture, text, user - as an actor of the internal and external social network of a community. This is schematically shown in Fig. 3, where the standardized data network utilized by the CQAS 100 is depicted, comprising interrelated content and user nodes. Some of the user nodes are exemplary indicated by the reference numerals 501-504 and some of the content nodes are exemplary indicated by the reference numerals 601-604.

Content reputation can be achieved via user reputations. The well known and reputable user 501, indicated by a triple circle, rubs off a certain amount of his reputation on other nodes around him - other users as node 502, other content as node 603, indicated by a double circle. These content nodes, as for instance content node 603, can be seen as low risky. Future content related to these nodes could be published automatically or could be higher rated.

An automatically tagged impermissible text, in Fig. 4 exemplary depicted as node 601 and indicated by a bold circle, also rubs off a certain amount of this on other nodes around him - other users as node 503, other content as e.g. node 602. Every other content or user node related to this has to be treated as ominous, indicated in Fig. 4 by a slightly bold circle, as this leads to a higher risk index. Contents of all ominous nodes have to be published manually or at least have to be analysed by all available methods before publishing.

In the following an exemplary data model is described which may be utilized for data representation purposes by the CQAS 100. The data stored in the database 150 is imported from the community partner server 200. This can be done on a daily, weekly, monthly basis - depending on the requested currentness. The CQAS 100 stores all data that is needed by the other modules, providing a unified view at the data for the assessment module 160 and for the export and reporting modules of front-end 140.

The data model comprises base entities, relationship entities and KPI entities.

The base entities are holding all information about relevant objects imported from the source systems, e.g. name of a user, subject of a forum thread or the text body of a blog post. The base entities do not store relationship information that describes how the base entities are interlinked. The base entities are:
- User - The user entity holds all information regarding users, for every user in the source system the relevant information is extracted and stored as a record set in the CQAS.
- Content - The content entity stores information about every kind of user generated content, stored within the CQAS. Content items could for example be: Blog posts, uploaded images, uploaded videos or user comments.
- Site - The site entity stores information external site references occurring in the foreign community system, e.g. a referrer or a community bookmark.
- Source - The site entity stores information external site references occurring in the foreign community system, e.g. a referrer or a community bookmark. The source entity is more specific than the site entity; it stores a specific external content item. The site entity only stores a site of a content item.
- Keyword - The Keyword Entity stores information that provides a description of a Content- or a User Entity. Examples are: User generated tags or community sections.

The relationship entities are provided as tables which store all information about how the base entities relate to one another. The tables store information like which user has viewed which content, which user is on the buddy list of another user or which content was produced by whom. The relationship entities are:
- User-User relation
- User-Content relation
- Content-Content relation
- Keyword-Content relation
- Keyword-User relation

The KPI entities store the data generated by the different classifiers. i.e. the analyzing module which is adapted to calculate a predetermined metric, for the base entities. To be flexible in regards of the data type generated by the classifiers each KPI entity preferably has a float (value_f), a string (value_s) and an integer (value_i) field. The KPI entities are:
- Content Metric
- Site Metric
- Source Metric
- User Metric

In the following suitable methods of text and video analysis are described in more detail. The text analysis allows to "meter" the quality of user-generated text by performing spell checking, determining the tonality and checking whether the posted text is relevant in the context it was published, e.g. on a certain blog, within a certain conversation. Additionally by performing extraction of meaningful index terms, it can be validated, if the "tags" chosen for an article are "matching" and provide recommendations for tags that provide a better description of the content. The text analysis module 162 preferably is based on corpus based linguistic text mining technologies. The process of analysis starts with a creation of a corpus by analyzing a large number of text documents ideally out of the domain that will later be the target of analysis. During this process the text documents are parsed and analyzed to create a statistical baseline of occurrences of words and their relative proximity to one another. Depending on analysis requirements basic preprocessing steps like stemming, i.e. reducing words to their most basic form, may also be performed. If the body of domain specific documents is not large enough, e.g. when an online community was just started recently, it is also possible to combine a general purpose corpus, e.g. "German language", with a smaller domain specific corpus. During the analysis phase the corpus is used to compare user generated text against the baseline corpus, thereby deciding which words in the text are of special statistical relevance, qualifying as index terms.

Video analysis works can be pictured by various sub processes. Depending on given information a video can be first checked with text-to-speech and object recognition methods, after the extraction of representative frames within the video streams. Results are text classificators (tags), similarity ratings to given classified sample sets and also likelihood information on whether some specific objects are included. Some exemplary subprocesses which may be performed in video analysis comprise:
- Object recognition: Identification of objects and patterns by means of sample material
- OCR: Analysis of faded-in texts
- Audiostream analysis with text to speech tools
- Classification: Identification of semantic concepts, e.g. people, sports, violence, explosions.
- Tagging: Classification of the trancsscripted text from the audiostream
- Extraction of representative frames within videostreams
- Analysis by similarity over defined input, outline of the searched image or by example data
- Combination of conventional search methods (tags or categories) after manual preclassification of a given sample set.

The invention advantageously provides a generic database structure with a set of tables to store SNA (Social Network Analysis) calculated data, wherein KPI'S (Key Performance Indicators) are calculated based on media analysis. A database import is performed which provides a clear separation between the CQAS and the customer equipment, thereby enabling data privacy protection. Furthermore an innovative network analysis is employed to calculate KPI'S between social connections and evaluated and rated content objects.

Accordingly, the invention with great advantage uniquely combines and enhances different technologies, such as social network analysis, text mining, usage of meta data related to content as well as to user profiles and interfaces to different types of content classifiers like text, photo, audio or video. For instance, the content ratings generated together with the user who provided the content are used within SNA-algorithms to calculate the KPI's User Content Centrality (CC), wherein the module performing the SNA uses the content ratings as weighted input.

For operators of social network service platforms the invention thereby provides great benefit in a number of use cases.

## Claims

1. A method for determining a quality measure associated with a social network service platform (210), comprising the steps of
- importing data from said social network service platform (210),
- transforming the imported data into a predetermined data structure,
- storing the transformed data in a database (150), wherein the data is stored as a data network of interrelated data entities (501-504; 601-604), comprising at least two different types of data entities,
- analyzing media content of at least one of said data entities (601-604),
- calculating a predetermined metric of at least one of said data entities (501-504; 601-604) based on the analysis results and on the relationships between the data entities (501-504; 601-604),
- storing the analysis results and/or said calculated metric in said database (150) as a quality measure of the social network service platform (210).

2. The method of claim 1, wherein the data imported from the social network service platform comprises user-generated content.

3. The method of claim 2, comprising the steps of evaluating the determined quality measure and transmitting a command to remove and/or block at least one item of user-generated content to the social network service platform (210).

4. The method of any one of the preceding claims, wherein said media content is at least one of a text file, an image, an audio sequence or a video sequence and wherein the step of analyzing the media content is based on parameters and/or samples provided by the social network service platform (210).

5. The method of any one of the preceding claims, wherein said data entities at least comprise user nodes representing users of the social network service platform and content nodes representing user-generated media content items, and wherein calculating said predetermined metric is based on correlations between different user nodes and on correlations between content nodes and user nodes.

6. The method of any one of the preceding claims, wherein the analysis yields a tag suitable for categorization of the analyzed data entity.

7. The method of any one of the preceding claims, wherein calculating a predetermined metric comprises calculating a key performance indicator using social network analysis tools.

8. A server for determining a quality measure associated with a social network service platform (210), comprising
- a data import interface (110) for importing data from said social network service platform (210), adapted to transform the imported data into a predetermined data structure,
- a database (150) for storing the transformed import data as a data network of interrelated data entities (501-504; 601-604), comprising at least two different types of data entities, and
- an assessment module (160) with access to said database (150), comprising at least one analyzing module (161, 162) for analyzing media content of at least one of said data entities (601-604) and a calculating module (164) for calculating a metric of at least one of said data entities (501-504; 601-604) based on results provided from at least one of said analyzing modules (161, 162) and on the relationships between the data entities (501-504; 601-604) in said data network, wherein the assessment module (160) is adapted to store the analysis results and/or said calculated metric in said database (150) as a quality measure of the social network service platform (210).

9. The server of claim 8, wherein said data import interface (110) is adapted to import data from the social network service platform which comprises user-generated content.

10. The server of claim 9, wherein the assessment module (160) is adapted to evaluate the determined quality measure and to transmit a command to remove and/or block at least one item of user-generated content to the social network service platform.

11. The server of any one of claims 8 to 10, wherein the analyzing module (161, 162) is adapted to analyze at least one of a text file, an image, an audio sequence or a video sequence based on parameters and/or samples provided by the social network service platform.

12. The server of any one of claims 8 to 11, wherein said data entities at least comprise user nodes representing users of the social network service platform and content nodes representing user-generated media content items, and wherein the calculating module (164) is adapted to calculate said predetermined metric based on correlations between different user nodes and on correlations between content nodes and user nodes.

13. The server of any one of claims 8 to 12, wherein the analyzing module (161, 162) is adapted to generate a tag suitable for categorization of the analyzed data entity.

14. The server of any one of claims 8 to 13, wherein the calculating module (164) is adapted to calculate a key performance indicator using social network analysis tools.
